Europäisches Patentamt

European Patent Office

Office européen des brevets

(11) Publication number: **0 195 616 B1**

# EUROPEAN PATENT SPECIFICATION

(45) Date of publication of patent specification: **04.03.92**   (51) Int. Cl.⁵: **B60L 5/20**

(21) Application number: **86301867.7**

(22) Date of filing: **14.03.86**

Divisional application 90202389.4 filed on 14/03/86.

(54) **Sliding plate support structure for current collector.**

(30) Priority: **18.03.85 JP 38726/85 U**
**22.06.85 JP 94561/85 U**
**17.07.85 JP 157685/85**
**30.10.85 JP 243616/85**

(43) Date of publication of application:
**24.09.86 Bulletin 86/39**

(45) Publication of the grant of the patent:
**04.03.92 Bulletin 92/10**

(84) Designated Contracting States:
**CH DE FR GB LI**

(56) References cited:
**FR-A- 2 201 989**
**GB-A- 1 014 761**
**GB-A- 1 416 349**
**US-A- 1 370 018**

(73) Proprietor: **TOYO DENKI SEIZO KABUSHIKI KAISHA**
**No. 7-2 2-Chome Yaesu Chuo-Ku**
**Tokyo 104(JP)**

(72) Inventor: **Kuwabara, Shigeo c/o Technical Laboratory**
**Toyo Denki Seizo K. K. 338-1, Aza-Ohgino Kamisoyanagi Yamato City Kanagawa Pref.(JP)**

(74) Representative: **Palmer, Roger et al**
**PAGE, WHITE & FARRER 54 Doughty Street London WC1N 2LS(GB)**

EP 0 195 616 B1

## Description

This invention relates to a support structure comprising support members resiliently supporting a plurality of current collector pieces or sliding plates.

Such a support can be used in a current collector such as a pantograph for an electric car or tramcar.

A current collector (referred to hereinafter "pantograph") for an electric vehicle has been used for collecting electric current from trolley wires into the vehicle smoothly. In order to slide trolley wires on sliding plates mounted on bow shaped members, a framework of the pantograph for supporting the bow shaped member or members is urged toward the trolley wires by spring forces so as to force the sliding plates against the wires through the bow members.

In the event of a vehicle running at high speeds or trolley wires arranged with insufficient accuracy, sliding portions of the pantograph may often lose contact with the wires to generate arcs. The generated arcs will directly shorten the service life of sliding portions of the wires and the pantograph, and moreover cause radio interference in areas along a railway to the detriment of people living in the area. Accordingly, the occurrence of the arcs should be restrained as much as possible.

In order to prevent the arcs, it is needed to improve followability of the pantograph so as not to lose contact with the wires. For this purpose, attempts have been made to make the moving masses of the pantograph as small as possible.

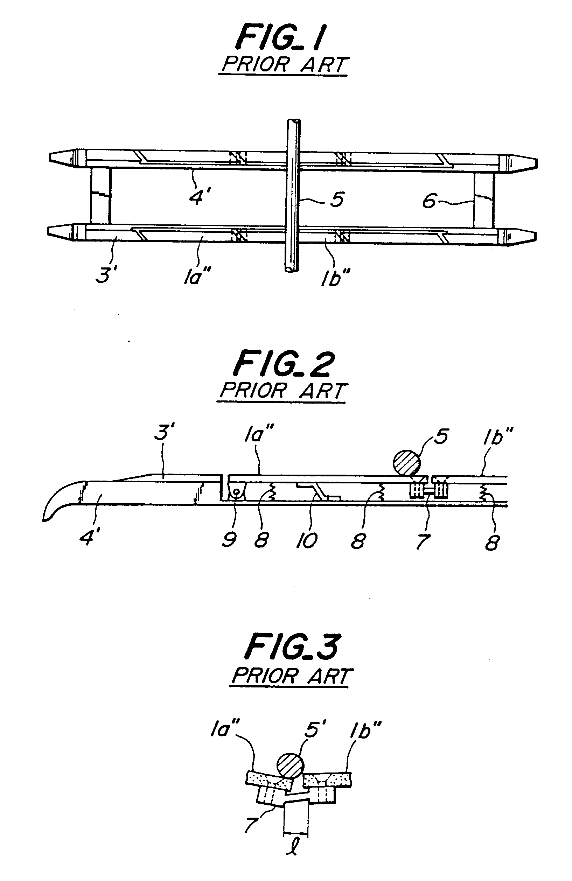

An example of improved followability will be explained with reference to Figures 1 to 3 of the accompanying drawings.

As shown in Figs. 1 and 2 of plan and side views, two bow shaped members 4' are usually connected by connecting arms 6 to form a unitary bow shaped member assembly which is mounted to a framework unit (not shown) through springs.

A plurality of sliding plates 1a" and 1b" in a row are supported through springs 8 on the one bow shaped member. Auxiliary sliding plates 3' are fixed on upper surfaces of ends of the bow shaped member. One end of the sliding plate 1a" at each end of the bow shaped member facing the auxiliary sliding plate 3' is pivotally movably connected to the bow shaped member 4' by means of a pin 9. The other end of the sliding plate 1a" and one end of the intermediate sliding plate 1b" adjacent thereto are connected by an elastic connecting member 7 to keep upper surfaces of all the sliding plates 1a" and 1b" in one plane. Shunts 10 extend from the respective sliding plates 1a" and 1b" to the bow shaped member 4' for collecting current.

The bow shaped member assembly as above constructed is mounted on the framework unit (not shown) to force the sliding plates against trolley wires 5 by means of main springs (not shown).

The dynamic action of the sliding plates 1a" and 1b" and the trolley wires 5 in this arrangement will be explained. If the trolley wires 5 are arranged in parallel with the moving direction of the vehicle, the wires slide always on substantially the same portions of the sliding plates to cause concentrated wearing to form grooves. Accordingly, trolley wires are arranged zigzag and distances between the wires and rails on which the vehicle runs are maintained as constant as possible. However, it is impossible to keep the distance absolutely constant.

In actual fact, the trolley wires are caused to move reciprocally in longitudinal directions of the bow shaped member relatively when the pantograph moves because of the zigzag arrangement of the wires, thereby keeping the surfaces of the sliding plates in contact with the wires to collect the electric current.

In order to improve the followability of the sliding plates 1a" and 1b" to the wires 5, the inertia of the sliding plates is made small to increase the following acceleration corresponding to the decrease of the mass. Accordingly, the sliding plates 1a" and 1b" are maintained following the trolley wires with the aid of the increased acceleration even if vibrations with larger amplitudes occur so that smooth current collecting is effected without causing bad phenomena such as arcs.

In this manner, with the current collector as shown in Figs. 1 and 2, the sliding plates are divided into a plurality of plates 1a" and 1b" supported by the springs 8 so as to make light the portions in contact with trolley wires 5, thereby increasing the followability of the collector.

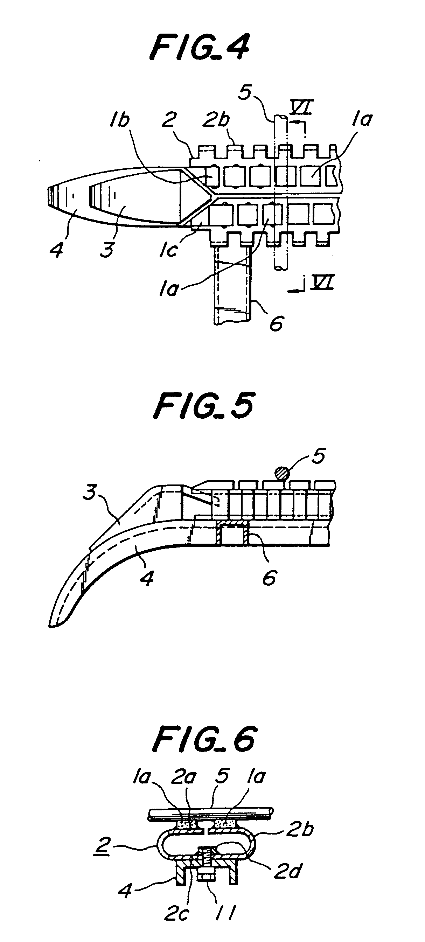

The above collector gives rise to two problems. The first problem is occurrence of difference in height between adjacent ends of the sliding plates 1a" and 1b" when a trolley wire moves from one to the other. As shown in Fig. 3, when the trolley wire 5 arrives at a tail end of the sliding plate 1a", pressing force of the wire 5 directly exerts on the sliding plate 1a", while the pressing force indirectly exerts on the sliding plate 1b" through the elastic connecting member 7. If the connecting member 7 were completely rigid, the force acting upon the sliding plate 1a" would be equally transmitted to the sliding plate 1b" without causing any difference in height between adjacent ends of these plates. However, such a rigid connection therebetween would contradict the object of the divided light weight sliding plates. In order to dynamically separate masses of the adjacent sliding plates 1a" and 1b" as aimed in the above, the elastic connecting member 7 should be made of a material having very flexible spring characteristics. With such a flexible connecting member, however, the force acting upon the sliding plate 1a" is not transmitted to the sliding plate 1b", so that a great vertical difference between the sliding plates 1a" and 1b" is caused. Accordingly, the trolley wire 5 cannot be smoothly transferred from the sliding plate 1a" to the sliding plate 1b".

On the other hand, adjacent ends of the sliding plates 1a" and 1b" are formed angularly relative to the longitudinal directions of the bow members 4' to cause parts of the adjacent ends to be overlapped as shown in Fig. 1 in order to avoid the above great difference in height of the sliding plates. However, it cannot solve this problem.

The spring characteristics of the elastic connecting members 7 are determined by the relation between the sliding plates. At any rate, the flexibility of the elastic connecting member 7 is needed. Therefore, the difference in height between the sliding plates directly and indirectly subjected to the pressing force cannot be avoided, and causes groove-shaped wearing at these ends and vibration resulting from the difference in height.

The second problem results from the fact that sizes of the divided sliding plates are not sufficiently small because of limitation by sizes of the other components, and the effect brought about by the division of the plates is substantially limited due to unavoidably increased masses of parts needed for the division of the plates.

In other words, as shown in Fig. 2, the elastic connecting member 7, springs 8, the pin 9, the shunt 10 and the like are necessary for supporting the sliding plates 1a" and 1b". Lengths of the sliding plates 1a" and 1b" cannot be shorter than a length which is the sum of longitudinal lengths of these members. Moreover, the reduction of widths of the sliding plates is limited owing to requirement of strength and constructional reason. Particularly, the elastic connecting member 7 cannot be shortened because it is absolutely needed to have an effective spring length $l$ owing to required spring characteristics in addition to required strength.

Accordingly, the sizes of the divided sliding plates 1a" and 1b" cannot be made small, and conversely the masses of the elastic connecting member 7, the spring 8, the pin 9, the shunt 10 and the like are increased, and there result, decreased reliability and increased cost.

FR-A-2201989 describes a current collector having a plurality of current collector pieces arranged along a bow-shaped support member, each current collector piece being secured by a respective support arrangement. Each support arrangement has an elastic body, a U-shaped leaf spring and a metallic support piece. Apart from the complexity of the support arrangements, the problems discussed above concerning the smooth transfer of wires from piece to piece remain.

GB-B-1014761 describes a current collector in which there are several parallel rows of current collector pieces supported by the support member via a flexible diaphragm subject to gaseous pressure. Reference is made to this document as it illustrates an arrangement in which the current collector plates in each row are offset relative to those in the adjacent row.

It is a principal object of the invention to provide an improved sliding plate support structure for a current collector, which eliminates all the above disadvantages of the prior art.

It is a further object of the invention to provide a sliding plate support structure for a current collector, whose followability to current supply wires is improved by reducing the masses of the pieces which undergo movement while preventing the steps or differences in height at adjacent ends of the pieces and preventing groove-shaped wearing and vibration at the adjacent ends of the pieces.

According to the present invention there is provided a sliding plate support structure for a current collector comprising: a bow shaped support member adapted to be carried by a travelling vehicle and with its length arranged transversely to the direction of travel of the vehicle; and a plurality of current collector plates spaced along the length of the support member and mounted thereon by a mounting structure arranged to bring the pieces into contact with a supply conductor for the vehicle, said current collector plates being arranged in at least two rows along the length of the support member, the current collector plates in one row being offset relative to those in the other row, characterized in that the mounting structure comprises a sheet of electrically conductive and resilient material having two rows of openings, the openings in each row being spaced apart to define therebetween leaf spring segments to which are secured said current collector plates, the sheet being secured to the support member with said rows of openings arranged along the length of the support member and being bent lengthwise so as to present said current collector plates to the supply conductor, wherein the mounting structure provides a resilient connection between the current collector plates in the plane of the current collector plates and resiliently supports the current collector plates perpendicularly to that plane, thereby enabling the current collector plates to move independently.

In a preferred embodiment, adjacent ends of the current collector plates in each row are oblique with respect to moving directions of a vehicle using the current collector.

In one embodiment, the current collector plates are secured to the leaf spring segments at the outer edge of the or each first-mentioned set of openings, a central region of the sheet being secured to the support member.

Portions of the sheet interconnecting said leaf spring segments are preferably formed into inverted Ω-shaped loops and the openings nearest in traverse directions are connected with each other by the openings formed in the central region.

The inverted Ω-shaped loops may be polygonal such as square.

The inverted Ω-shaped loops of the leaf spring body preferably have initial spring forces acting inwardly to force the current collector plates associated therewith into abutment against each other. Surfaces of adjacent ends of said current collector plates can be so inclined to form a triangular space therebetween diverging toward each inverted Ω-shaped loop so that upper edges of the adjacent ends are normally in line contact with each other by the initial force of the inverted Ω-shaped loop of the sheet.

In another embodiment of the invention, the sheet has a further set of such openings arranged along a central region of the sheet, the current collector plates are secured in two rows extending on either side of the central plurality of openings and wherein opposing edge regions of the sheet are bent round and secured to the support member.

In this embodiment, the sheet (which is described herein as a leaf spring body) is provided on both sides with mounting portions for detachably mounting the leaf spring body on the support member and formed in a center with the leaf spring segments. The leaf spring body has between the leaf spring segments and the mounting portion elongated openings in alignment with longitudinal directions of the leaf spring body to form support spring portions in alignment in traverse directions with the current collector plates to be arranged on the nearest leaf spring segment. The leaf spring body is formed in the center between the leaf spring segment with apertures each extending over substantial width of the center, thereby separating masses of movement of the current collector plates in the one row and the other row and the leaf spring body is curved at the support spring portions and detachably mounted with the mounting portion on the support member.

Reference is made to European Application No. 90202389.4 divided from the present application.

These and other objects, advantages, features, and uses will become more apparent as the description proceeds, when considered with the accompanying drawings in which:

Fig. 1 is a plan view of bow members of a current collector of the prior art;

Fig. 2 is a side view of the bow member shown in Fig. 1;

Fig. 3 is a partial enlarged side view of adjacent ends of sliding plates of the collector shown in Fig. 1;

Fig. 4 is a partial plan view of a sliding plate support structure according to a first embodiment of the invention;

Fig. 5 is a side view of the structure shown in Fig. 4;

Fig. 6 is a sectional view of a leaf spring body taken along a line VI-VI in Fig. 4;

Fig. 7 is a development view of the leaf spring body shown in Fig. 6;

Fig. 8 is an enlarged side view of sliding plate pieces in contact with a trolley wire;

Fig. 9 is a partial plan view of another embodiment of the invention;

Fig. 10 is a partial plan view of a further embodiment of the invention;

Fig. 11 is a side view of the sliding plate support structure shown in Fig. 10;

Fig. 12 is a sectional view taken along the line XII-XII in Fig. 10;

Fig. 13a is a development view of a leaf spring body used in the embodiment shown in Fig. 10;

Fig. 13b is a partial side view of a leaf spring body shown in Fig. 13a;

Fig. 14 is a side view illustrating another embodiment of the leaf spring body;

Fig. 15 is a side view illustrating a preferred embodiment of the leaf spring body;

Fig. 16 illustrates a condition when adjacent ends of sliding pieces are lowered by a trolley wire;

Fig. 17a illustrates a condition when adjacent ends of sliding pieces are raised by a trolley wire;

Fig. 17b illustrates a condition similar to that shown in Fig. 16;

Fig. 18 is a partial plan view of another embodiment of the support structure according to the invention;

Fig. 19 is a side view of the structure shown in Fig. 18;

Fig. 20 is a sectional view taken along the line XX-XX in Fig. 18;

Fig. 21 is a development view of leaf spring body used in the structure shown in Fig. 18;

Fig. 22 is a partial plan view of a further embodiment of the invention; and

Fig. 23 is a partial plan view of a modification of the embodiment shown in Fig. 22.

Figs. 4, 5 and 6 illustrate one embodiment of the invention. Two elongate support members, herein refered to as bow members 4 (only one shown in the drawings) are connected by connecting arms 6 to form a unitary body and mounted in a framework of a pantograph so as to urge current collector pieces in the form of sliding plates on upper surfaces of the bow members 4 against trolley wires 5 for an electric car by forces of springs.

A great number of sliding plate pieces 1a, 1b and 1c are contiguously arranged in two rows on the bow member 4 in its longitudinal directions. Adjacent ends of the pieces in one row are shifted in the longitudinal direction with respect to adjacent ends of the pieces in the other row so as not to be aligned with each other in transverse directions.

The sliding plate pieces 1a, 1b and 1c are fixed to a continuous elastic stainless steel plate as by welding. However, any other plate-like elastic material may be used such as phosphor bronze or the like so long as it has spring action, stainless property and good electric conductivity.

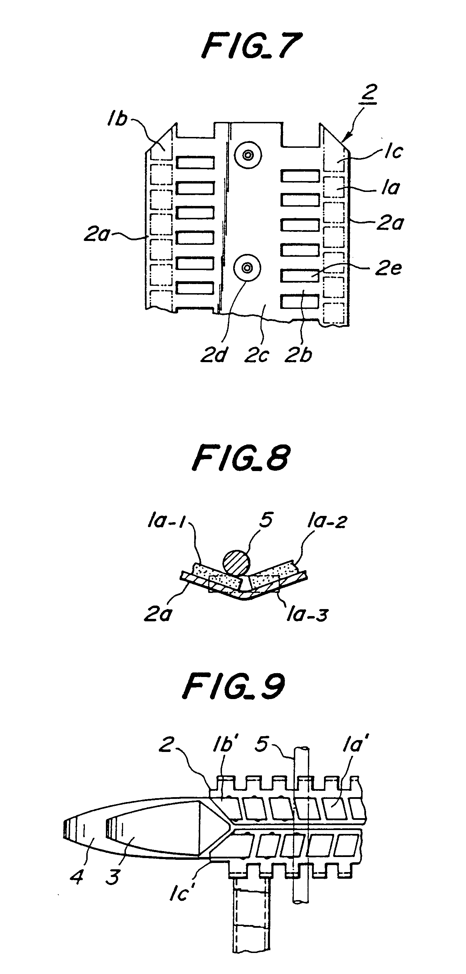

The above stainless steel plate is formed as a leaf spring body 2 as a unitary body detachably resiliently supported on the bow member 4 at locations corresponding to the sliding plate pieces. Fig. 7 is a development view of the leaf spring body 2 which is provided on both sides with sliding plate fixing portions 2a each for fixing a number of the adjoining sliding plate pieces 1a, 1b and 1c in a row on the leaf spring body 2. The leaf spring body 2 is further provided along its center with a mounting portion 2c having female screw members 2d fixed thereto by welding for fixing the leaf spring body 2 to the bow member 4 by means of bolts 11. The leaf spring body 2 is formed integrally with the sliding plate fixing portions 2a, the mounting portion 2c and support spring portions 2b connected between the mounting portion 2c and the sliding plate fixing portions 2a at each sliding plate piece.

The leaf spring body 2 having such a configuration is formed into opposed U-shapes so as to cause the support spring portions 2b to be semicircular as shown in Fig. 6. As above described, the adjoining ends of the sliding plate pieces 1a, 1b and 1c in the right and left rows are shifted so as not to be aligned with each other in running directions of a vehicle.

In more detail, in order to form the support spring portions 2b, elongated rectangular openings 2e are formed by punching, so that the rectangular openings 2e on the left side are aligned with the support spring portions 2b on the right side, and the rectangular openings 2e on the right side are aligned with the support spring portions 2b on the left side in the running directions of the vehicle (not shown) as in Fig. 7.

The leaf spring body 2 supporting the sliding plate pieces 1a, 1b and 1c thereon in unison is resiliently mounted on the bow member 4 by means of bolts 11. The outermost sliding plate pieces 1b and 1c on both sides of the bow member 4 have outer ends which are oblique relative to the running directions of the vehicle. The leaf spring body 2 has also oblique ends at ends of the sliding plate fixing portions 2a as shown in Fig. 7. An auxiliary sliding plate 3 is fixed to the bow member 4 and has a triangular end mating with the oblique ends of the outermost sliding plate pieces 1b and 1c and overlapping the pieces 1b and 1c in the running directions of the vehicle (Figs 4 and 5).

Parts of the overlapping portions of the sliding plate pieces 1b and 1c and the auxiliary sliding plate 3 are chamfered relative to a horizontal plane in order to achieve smooth movement of trolley wires 5 on these members. In this case, the wire 5 scarcely slides on the auxiliary sliding plate 3 beyond the outermost sliding plate pieces 1b and 1c.

Fig. 8 is an enlarged side view of the proximity of sliding plate pieces for explaining how these members move when a wire 5 slides thereon in the sliding plate support structure of a current collector according to this embodiment.

Assuming that a trolley wire 5 has arrived at an end of a first sliding plate piece 1a-1 adjacent to an end of a second sliding plate piece 1a-2, the pressing force of the wire 5 of course acts directly on the piece 1a-1 and indirectly on the piece 1a-2 through a sliding plate fixing portion 2a. At the same time, the force acts directly on a third sliding piece 1a-3 fixed to a sliding plate fixing portion 2a on opposite side to the above sliding plate fixing portion 2a. As adjacent ends of the sliding plate pieces on the side of the third sliding piece 1a-3 are shifted from the adjacent ends of the first and second sliding pieces 1a-1 and 1a-2, the pressing force of the wire 5 acts on the third sliding piece 1a-3 substantially at its center at the moment shown in Fig. 8. As to the third sliding piece 1a-3, there is no difference in height because it is a single piece. A pressing force which is substantially equal to the total pressing force from the trolley wire 5 minus a force acting upon the third sliding piece 1a-3 will cause the difference in height between the first and second sliding pieces 1a-1 and 1a-2. Accordingly, the pressing force causing the difference in height becomes a very slight force, and therefore the difference in height scarcely occurs in conjunction with the fact that the sliding plate pieces 1a-1 and 1a-2 are fixed to the continuous sliding plate fixing portion 2a and very closely adjacent to each other.

According to the invention, moreover, particular elastic connecting members 7, springs 8, pins 9, shunts 10, and the like are not needed for supporting the sliding pieces 1a-1c as a unitary body, so that the divided sliding pieces can be made smaller in longitudinal and transverse directions at will.

Furthermore, the sliding plate support structure according to the invention does not increase the masses of other parts, so that the moving masses can be kept small to increase the followability of the pantograph. For example, in comparison of this embodiment with the prior art using standard pantographs of the new Japanese superexpress railway (Shinkansen), substantial inertia of the moving masses can be reduced at least to 1/20-1/30 of that in the prior art, so that a remarkably improved effect can be obtained.

Fig. 9 illustrates another embodiment of the invention wherein like components have been designated by the same reference numerals as those in the previous embodiment. It is substantially similar to the previous embodiment with exception that the sliding pieces 1a', 1b' and 1c' are parallelogramic as viewed in Fig. 9 so that adjacent ends of the sliding pieces are oblique in moving directions of a vehicle so as to overlap with each other in these directions. With this arrangement, a trolley wire will move progressively from one sliding piece to the other without any stepwise transistion, so that smoother sliding movement can be accomplished.

As can be seen from the above explanation, according to the invention the inertia of the sliding plates on the pantograph moving following trolley wires is slight, so that the followability of the sliding plates to the wires is considerably improved, thereby preventing the groove-shaped wearing at adjacent ends of sliding plates and vibration caused by difference in height of the plates. Accordingly, the sliding plate support structure according to the invention does not cause undesirable phenomena such as arcs. Moreover, the sliding plate support structure with the leaf spring bodies according to the invention is reliable in operation, economical of manufacture and simple and easy to maintain, repair and replace.

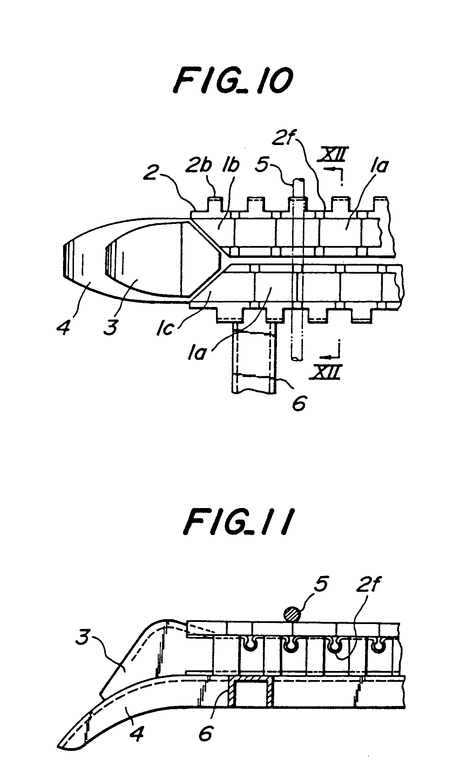

Figs. 10 to 13b illustrate a further embodiment of the invention, wherein like components have been designated by the same reference numerals as in the previous embodiments.

Two bow members 4, connecting arms 6, sliding plate pieces 1a, 1b and 1c are substantially the same as those in Fig. 4, so that these members will not be described in further detail.

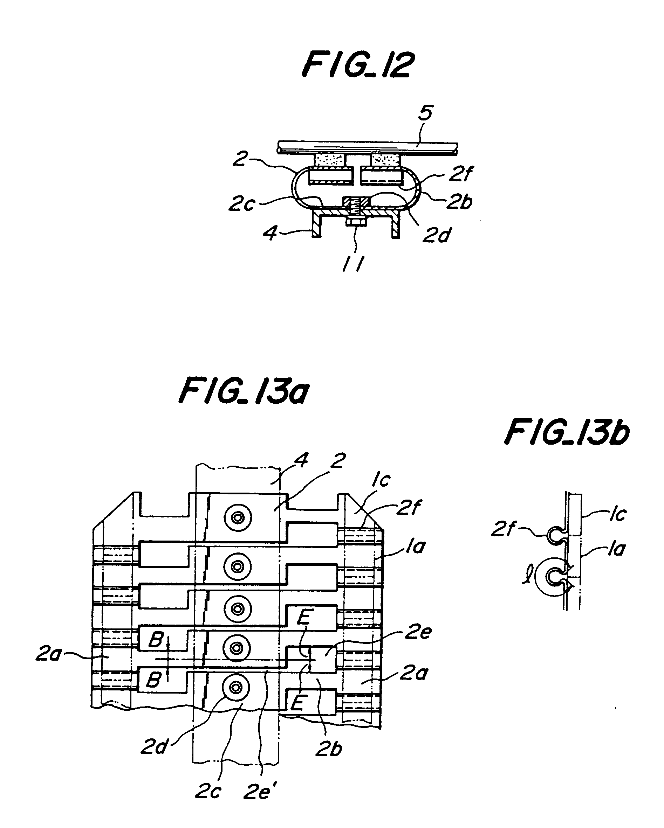

Fig. 13a is a development view illustrating the leaf spring body 2. Fig. 13b illustrates a part of the leaf spring body including inverted $\Omega$-shaped loops. The leaf spring body 2 is provided on both sides with sliding plate fixing portions 2a for fixing a number of the adjoining sliding plate pieces 1a, 1b and 1c. Portions of each sliding plate fixing portion corresponding to adjoining ends of the sliding pieces are formed into inverted $\Omega$-shaped loops. The leaf spring body 2 is further provided along its center with a mounting portion 2c having female screw members 2d fixed thereto by welding for fixing the leaf spring body 2 to the bow member 4 by means of bolts 11. The leaf spring body 2 having such a configuration is formed so as to cause support spring portions 2b to be semicircular as shown in Fig. 12 in substantially the same as in Fig. 6. In the same manner as in Fig. 7, the adjoining ends of the sliding plate pieces in the right and left rows are shifted so as not to be aligned with each other in running directions of a vehicle (not shown) as shown in Fig. 13a. In order to compensate for the shortening of the longitudinal dimension of the leaf spring body 2 due to the $\Omega$-shaped loops 2f, pairs of openings 2e each connected by slots 2e' are formed in alignment with respective pairs.

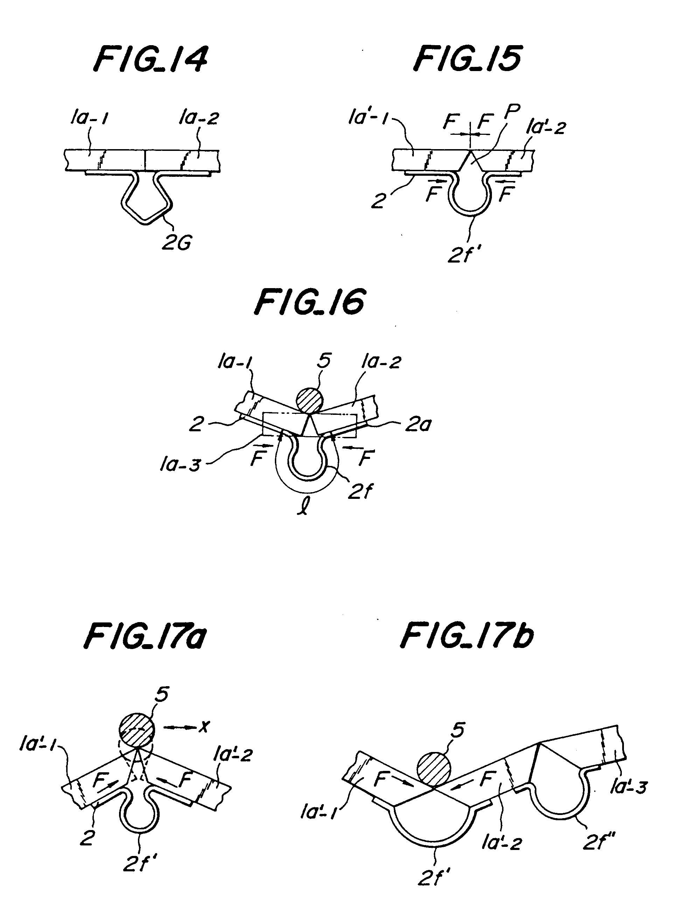

Instead of the inverted $\Omega$-shaped loops 2f, polygonal loops 2G including straight portions may be used such as square as shown in Fig. 14, which can achieve the aimed object in the same manner.

As such inverted $\Omega$-shaped loops enable the leaf spring body to increase an effective spring length $l$ (Figs. 13b and 16) at will without spacing the sliding pieces 1a-1c, the leaf spring body can achieve its performance without losing its strength and rigidity having spring characteristic, even if adjacent sliding plate pieces 1a-1 and 1a-2 are greatly angularly positioned.

Fig. 15 illustrates shapes of adjacent ends of sliding plate pieces wherein adjacent surfaces of the pieces 1a'-1 and 1a'-2 are inclined to form a triangular space P diverging toward an inverted $\Omega$-shaped loop 2f'. The sliding plate pieces are fixed to the leaf spring body 2 so as to force these pieces toward each other to give an initial force to the leaf spring body 2. In this manner, the adjacent sliding pieces are in line contact with each other with force F.

Fig. 16 is an enlarged side view of the proximity of sliding plate pieces for explaining how these members move when a wire 5 slides thereon in the sliding plate support structure of a current collector according to this embodiment.

Assuming that a trolley wire 5 has arrived at an end of a first sliding plate piece 1a-1 adjacent to an end of a second sliding plate piece 1a-2, the pressing force of the wire 5 of course acts directly on the piece 1a-1 and indirectly on the piece 1a-2 through a sliding plate fixing portion 2a. At the same time, the force acts directly on a third sliding piece 1a-3 fixed to a sliding plate fixing portion 2a on opposite side to the above sliding plate fixing portion 2a. As adjacent ends of the sliding plate pieces on the side of the third sliding piece 1a-3 are shifted from the adjacent ends of the first and second sliding pieces 1a-1 and 1a-2, the pressing force of the wire 5 acts on the third sliding piece 1a-3 substantially at its center at the movement shown in Fig. 8. As to the third sliding piece 1a-3, there is no difference in height because it is a single piece. A pressing force which is substantially equal to the total pressing force from the trolley wire 5 minus a force acting upon the third sliding piece 1a-3 will cause the difference in height between the first and second sliding pieces 1a-1 and 1a-2. Accordingly, the pressing force causing the difference in height becomes a very slight force, and therefore the difference in height scarcely occurs in conjunction with the fact that the sliding plate pieces 1a-1 and 1a-2 are fixed to the continuous sliding plate fixing portion 2a and very closely adjacent to each other.

However, above action between these members is considered in a steady condition. In actual case, particularly at high speeds, various external disturbing factors are added to the above steady condition to cause a condition as shown in Fig. 17a although it is seldom, if ever. If adjacent ends of sliding pieces 1a' -1 and 1a'-2 assume the positions shown in broken lines in Fig. 17a and at the moment a trolley wire arrives at the position shown in a broken line, the wire will be fitted in a space between the ends of the sliding pieces, so that smooth movement of the wire 5 in directions x is obstructed and therefore irregular wear at the edges and vibrations are caused. As shown in Fig. 17a, however, as the adjacent ends of the sliding pieces 1a'-1 and 1a'-2 are forced toward each other by the action of the initial forces F and the end faces of these pieces are inclined, uppermost edges of the end faces are in line contact with each other without forming any space therebetween into which the trolley wire is fitted, so that the trolley wire moves smoothly in the directions x.

Even if the adjacent ends of the sliding pieces 1a'-1 and 1a'-2 assume in positions shown in Fig. 17b where the adjacent ends are lowered, the sliding pieces are in line contact with each other to be rigidly connected by the initial forces F without any space on the side of the wire, so that the wire moves smoothly without the irregular wear and vibration. In view of dynamics it is of course necessary to reduce the mass of movement of members subjected to the force of the trolley wire by separating the sliding piece from the adjacent sliding piece. In this case, as the sliding pieces 1a'-1 and 1a'-2 are in line contact with each other, they act about the contact line as a rotating axis. In other words, when the sliding piece 1a'-1 is subjected to the weight of the trolley wire 5, the sliding piece 1a'-1 is depressed and the end of the sliding piece 1a'-2 to which is attached a spring loop 2f' is also depressed. Moreover, as the sliding piece 1a'-2 is connected to a next sliding piece 1a'-3 with a spring loop 2f", the sliding piece 1a'-2 is tilted so as to raise its right hand end viewed in Fig. 17b, so that one half of the mass of the sliding piece 1a'-2 is moved by the application of the electric wire 5. Moreover, the mid portion of the sliding piece is urged upwardly by a spring (not shown), the right end of the sliding piece is raised viewed in Fig. 17b as the function of a lever. The sliding piece 1a'-3 is scarcely moved because of the spring loop 2f" deformed and absorbing transmitted force, so that the mass of the sliding piece 1a'-1 subjected to the force of the trolley wire becomes under a condition separated from the other members. Although the three sliding pieces have been explained, it holds true in sliding pieces arranged on the left side of the sliding pieces 1a'-1 or sliding pieces arranged in two rows.

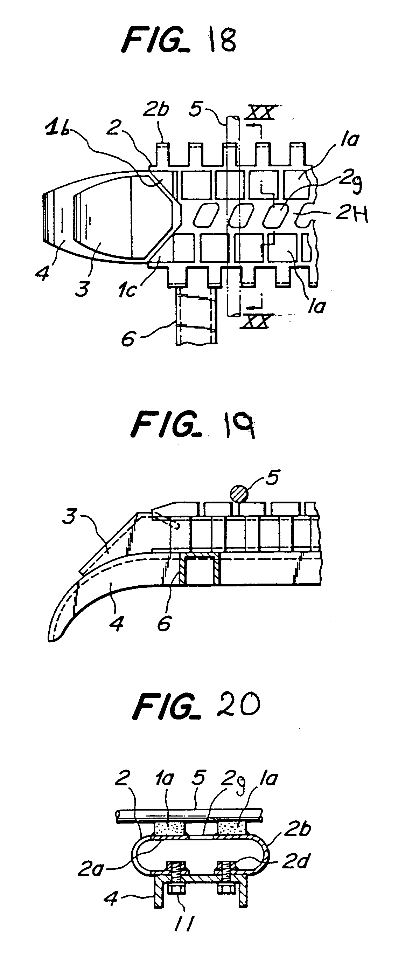

Figs. 18-23 illustrate a further embodiment of the invention. Two bow shaped members 4 (only one shown in the drawings) are connected by connecting arms 6 to form a unitary body and mounted in a framework of a pantograph so as to urge sliding plates on upper surfaces of the bow members 4 against trolley wires 5 for an electric car by forces of springs.

The bow members 4, connecting arm 6 and pieces 1a, 1b, 1c are similar to those described earlier.

The sliding plate pieces 1a, 1b and 1c are fixed to a continuous resilient plate as by welding, the plate being as described earlier.

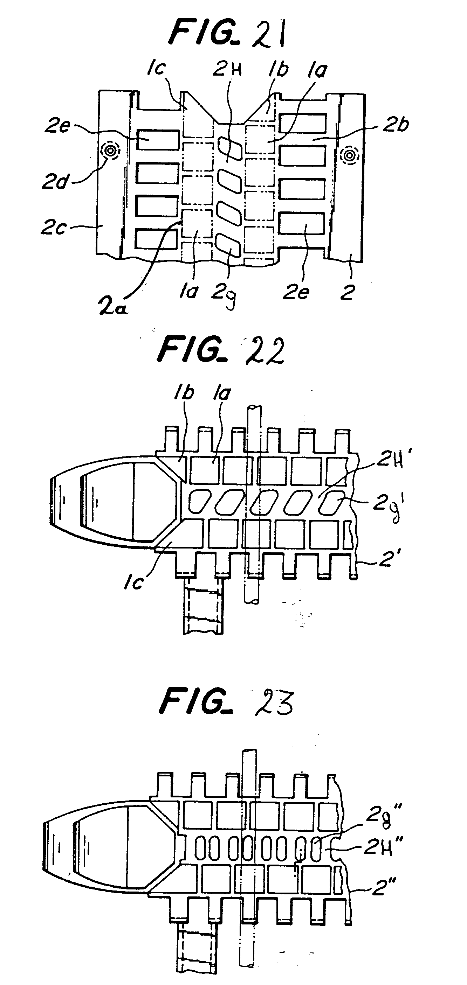

Fig. 21 is a development view of the leaf spring body 2 which is provided at its center with sliding plate fixing portions 2a for fixing a number of the adjoining sliding plate pieces 1a, 1b and 1c in two rows on the leaf spring body 2. The leaf spring body 2 is further provided on both slides with mounting portions 2c having female screw members 2d fixed thereto by welding for fixing the leaf spring body 2 to the bow member 4 by means of bolts 11. The leaf spring body 2 is formed integrally with the sliding plate fixing portions 2a, the mounting potions 2c and support spring portions 2b connected between the mounting portion 2c and the sliding plate fixing portions 2a at each sliding plate piece.

The leaf spring body 2 having such a configuration is formed into opposed U-shapes so as to cause the support spring portions 2b to be semicircular as shown in Fig. 20. As above described, the adjoining ends of the sliding plate pieces 1a, 1b and 1c in the right and left rows are shifted so as not to be aligned with each other in running directions of a vehicle.

In order to separate masses of movement of sliding plate pieces abutting against a trolley wire and pieces linked with the abutting pieces, the leaf spring body 2 is formed between the sliding pieces with apertures 2g for preventing steps at adjacent ends of the pieces and formed in support spring portions 2b with openings 2e.

In more detail, as shown in Fig. 21, the leaf spring body 2 is formed in its center with apertures 2g extending over substantial width of the center along oblique lines connecting adjacent ends of the sliding pieces in one row and the other row to form leaf spring portions 2H between the apertures 2g to connect two rows of the sliding pieces. Shapes and configurations of the leaf spring portion 2H are so determined that connecting spring characteristics relative to the respective sliding plate pieces 1a can be obtained in order to obtain smooth movement of trolley wire without steps at adjacent ends of the sliding pieces when the wire passes on the sliding pieces. Moreover, on outer sides of the sliding plate pieces 1a the openings 2e are formed to form the support spring portions 2b extending from centers of the pieces, so that the openings 2e on left side are aligned with the support spring portions 2b viewed in Fig. 21 in moving directions of a vehicle, and openings 2e on right side are aligned with the support spring portions 2b.

The leaf spring body 2 supporting the sliding plate pieces 1a, 1b and 1c thereon in unison is resiliently mounted on the bow member 4 by means of bolts 11. The outermost sliding plate pieces 1b and 1c on both sides of the bow member have outer ends which are oblique relative to the running directions of the vehicle. The leaf spring body 2 has also oblique ends at ends of the sliding plate fixing portions 2a as shown in Fig. 21. An auxiliary sliding plate 3 is fixed to the bow member 4 and has a trapezoidal end mating with the oblique ends of the outermost sliding plate pieces 1b and 1c and overlapping the pieces 1b and 1c in the running directions of the vehicle.

Parts of the overlapping portions of the sliding plate pieces 1b and 1c and the auxiliary sliding plate 3 are chamfered relative to a horizontal plane in order to achieve smooth movement of trolley wires 5 on these members. In this case, the wire 5 scarcely slides on the auxiliary sliding plate 3 beyond the outermost sliding plate pieces 1b and 1c.

With this arrangement, the movement of these members when a wire 5 slides thereon will not be described in further detail since it is substantially the same as that explained by referring to Fig. 8.

Figs. 22 and 23 illustrate other embodiments of the invention where like components have been designated by the same reference numerals as used in the previous embodiments. The embodiment shown in Fig. 22 is substantially similar to that shown in Fig. 18 with exception that a leaf spring body is formed with apertures 2g' extending along oblique lines connecting centers of the sliding pieces in two rows to form leaf spring portions 2H' extending along oblique lines connecting adjacent ends of the sliding pieces in two rows.

The embodiment shown in Fig. 23 is also substantially similar to that shown in Fig. 18 with exception that a leaf spring body is formed with elongated apertures 2g" extending over substantial width of the center perpendicularly to a longitudinal direction of a bow member and starting at and aligned with adjacent ends of sliding pieces on both sides to form leaf spring portions 2H". As an alternative, instead of the apertures 2g, 2g' and 2g", a plurality of apertures may be formed in symmetry in an intermediate portion of a leaf spring body 2. Any shapes of apertures may be formed so long as the leaf spring body 2 is a unitary body.

With these arrangement, various moving characteristics of sliding pieces abutting against electric wires and linking characteristics of adjacent sliding plate pieces can be obtained by last three embodiments in Figs. 18, 22 and 23. In addition to complicated actions of vehicles in various directions, there are various characteristics of trolley wires, so that the optimum conditions are not necessarily obtained only by considering characteristics of typical pantographs. Accordingly, these embodiments are useful because optimum characteristics can be selected from various characteristics.

## Claims

1. A sliding plate support structure for a current collector comprising: a bow shaped support member (4) adapted to be carried by a travelling vehicle and with its length arranged transversely to the direction of travel of the vehicle; and a plurality of current collector plates (1a,1b,1c) spaced along the length of the support member (4) and mounted thereon by a mounting structure (2) arranged to bring the pieces into contact with a supply conductor (5) for the vehicle, said current collector plates (1a,1b,1c) being arranged in at least two rows along the length of the said support member (4), the current collector plates in one row being offset relative to those in the other row, characterized in that the mounting structure (2) comprises a sheet of electrically conductive and resilient material having two rows of openings (2e), the openings in each row being spaced apart to define therebetween leaf spring segments (2b) to which are secured said current collector plates (1a,1b,1c), the sheet being secured to the support member (4) with said rows of openings (2e) arranged along the length of the support member (4) and the sheet being bent lengthwise so as, when the structure is in use, to bring said current collector plates (1a,1b,1c) in contact with the supply conductor (5), wherein the mounting structure (2) provides a resilient connection between the current collector plates (1a,1b,1c) in the plane of the current collector plates (1a,1b,1c) and resiliently supports the current collector plates (1a,1b,1c) perpendicularly to that plane, thereby enabling the current collector plates (1a,1b,1c) to move independently.

2. A support structure as claimed in claim 1, wherein the edges of the current collector plates (1a,1b,1c) are so shaped as to substantially eliminate differences in level between the pieces as the current supply conductor (5) urges one current collector plate downwardly relative to its neighbours.

3. A support structure as set forth in claim 1 or 2, wherein adjacent edges of said collector plates (1a') are oblique with respect to the direction of travel of a vehicle using said current collector (5).

4. A support structure as set forth in claim 2, wherein outer edges of the endmost collector plates (1c) of both sets are oblique and define a triangular space and which further comprises an auxiliary collector plate (3) having a triangular end in said triangular space, wherein abutting parts of the endmost collector plates (1c) and the collector plate (3) are chamfered.

5. A support structure as set forth in any preceding claim, wherein portions of said sheet interconnecting said leaf spring segments (2b) are formed into inverted Ω-shaped loops (2f).

6. A support structure as set forth in claim 5, wherein said inverted Ω-shaped loops are polygonal (2G), for example square.

7. A support structure as set forth in claim 5 or 6, wherein said inverted Ω-shaped loops (2f,2f') of said sheet have initial spring forces acting inwardly to force the current collector plates (1a'-1,1a'-2) associated therewith into abutment with each other.

8. A support structure as set forth in claim 7, wherein surfaces of adjacent edges of said current collector plates (1a'-1,1a'-2) are so inclined as to form a triangular space (P) therebetween diverging toward each of the inverted Ω-shaped loops that upper edges of the surfaces of the adjacent edges are normally in line contact with each other by the initial force (F) of the inverted Ω-shaped loops.

9. A support structure as claimed in claim 1, wherein the sheet has a further set of openings (2g) arranged along a central region of the sheet, the current collector plates (1a) are secured in two rows extending on either side of the central plurality of openings (2g) and wherein opposing edge regions of the sheet are bent round and secured to the support member (4).

10. A support structure as set forth in claim 9, wherein the openings (2g) of the further set are arranged obliquely to extend between adjacent edges of two current collector plates (1a) in one row and adjacent edges of the two nearest current collector pieces (1a) in the other row.

11. A support structure as set forth in claim 9 when appended to claim 2, wherein said openings (2g') of the further set are arranged obliquely to extend between a center of a current collector plate (1a) in one row and a center of the nearest current collector plate (1a) in the other row.

12. A support structure as set forth in claim 9 when appended to claim 2, wherein said openings (2g") of the further set are arranged to extend substantially perpendicularly to the length of the sheet and to be aligned with adjacent edges of the current collector plates (1a) in the rows.

13. A support structure as claimed in claim 1 or 2, wherein the current collector plates (1a,1b,1c) are secured to the leaf spring segments (2b) at she outer edge of the or each first-mentioned set of openings (2e), a central region of the sheet being secured to the support member (4).

**Revendications**

1. Structure de support de plaques de frottement de collecteur de courant comprenant : un élément support en forme d'arc (4) adapté à être monté sur un véhicule, sa longueur étant disposée transversalement à la direction de déplacement du véhicule ; et une pluralité de plaques collectrices de courant (1a, 1b, 1c) espacées dans le sens de la longueur de l'élément support (4) et fixées à celui-ci par une structure de montage (2) disposée pour amener les pièces en contact avec un conducteur d'alimentation (5) du véhicule, lesdites plaques collectrices de courant (1a, 1b, 1c) étant disposées en au moins deux rangées dans le sens de la longueur dudit élément support (4), les plaques collectrioes de courant d'une rangée étant décalées par rapport à celles de l'autre rangée, caractérisée en ce que la structure de montage (2) comprend une feuille en un matériau électriquement conducteur et élastique muni de deux rangées d'ouvertures (2e), les ouvertures dans chaque rangée étant espacées pour définir entre elles des segments de ressort à lame (2b) sur lesquels sont fixées lesdites plaques collectrices de courant (1a, 1b, 1c), la feuille étant fixée à l'élément support (4), lesdites rangées d'ouvertures (2e) étant disposées dans le sens de la longueur de l'élément support (4) et la feuille étant recourbée autour de l'axe longitudinal de manière que, quand la structure est utilisée, lesdites plaques collectrices de courant (1a, 1b, 1c) sont amenées en contact avec le conducteur d'alimentation (5), la structure de montage (2) assurant une liaison élastique entre les plaques collectrices de courant (1a, 1b, 1c) dans le plan des plaques collectrices de courant (1a, 1b, 1c) et supportant élastiquement les plaques collectrices de courant (1a, 1b, 1c) perpendiculairement à ce plan, d'où il résulte que les plaques collectrices de courant (1a, 1b, 1c) peuvent se déplacer indépendamment.

2. Structure de support selon la revendication 1, dans laquelle les bords des plaques collectrices de courant (1a, 1b, 1c) ont des formes telles qu'elles éliminent sensiblement les différences de hauteur entre les plaques lorsque le conducteur d'alimentation en courant (5) exerce une pression tendant à abaisser l'une des plaques par rapport à ses plaques voisines.

3. Structure de support selon l'une des revendications 1 et 2, dans laquelle des bords adjacents desdites plaques collectrices (1a') sont obliques par rapport à la direction de déplacement du véhicule utilisant ledit collecteur de courant (5).

4. Structure de support selon la revendication 2, dans laquelle les bords externes des plaques collectrices extrêmes (1c) des deux jeux de plaques sont obliques et définissent un espace triangulaire et qui comprend en outre une plaque collectrice auxiliaire (3) ayant une extrémité triangulaire dans ledit espace triangulaire, les parties en butée des plaques collectrices extrêmes (1c) et de la plaque collectrice (3) étant chanfreinées.

5. Structure de support selon l'une quelconque des revendications précédentes, dans laquelle les parties de ladite feuille interconnectant lesdits segments de ressort à lame (2b) sont conformées en boucles (2f) en forme de Ω inversé.

6. Structure de support selon la revendication 5, dans laquelle lesdites boucles en forme de Ω inversé sont polygonales (2G), par exemple carrées.

7. Structure de support selon l'une des revendications 5 et 6, dans laquelle lesdites boucles (2f, 2f') en forme de Ω inversé de ladite feuille présentent des forces élastiques initiales agissant vers l'intérieur pour plaquer entre elles les plaques collectrices de courant (1a'-1, 1a'-2) associées.

8. Structure de support selon la revendication 7, dans laquelle les faces des bords adjacents desdites plaques collectrices de courant (1a'-1, 1a'-2) sont inclinées de manière à former un espace triangulaire (P) entre elles divergeant vers chacune des boucles en forme de Ω inversé de manière que les bords supérieurs des faces des bords adjacents sont normalement en contact linéaire l'un avec l'autre grâce à la force initiale (F) des boucles en forme de Ω inversé.

9. Structure de support selon la revendication 1, dans laquelle la feuille comprend un autre jeu d'ouvertures (2g) disposées le long d'une région centrale de la feuille, les plaques collectrices de courant (1a) sont fixées en deux rangées s étendant de part et d'autre des ouvertures centrales (2g), et les régions d'extrémité opposées de la feuille sont recourbées et fixées à l'élément support (4).

10. Structure de support selon la revendication 9, dans laquelle les ouvertures (2g) de l'autre jeu sont disposées obliquement de manière à s'étendre entre les bords adjacents de deux plaques collectrices de courant (1a) d'une rangée et les bords adjacents des deux plaques collectrices de courant les plus proches (1a) de l'autre rangée.

11. Structure de support selon la revendication 9, prise en combinaison avec la revendication 2, dans laquelle lesdites ouvertures (2g') de l'autre jeu sont disposées obliquement de manière à s'étendre entre le centre d'une plaque collectrice de courant (1a) d'une rangée et le centre de la plaque collectrice de courant la plus proche (1a) de l'autre rangée.

12. Structure de support selon la revendication 9, prise en combinaison avec la revendication 2, dans laquelle lesdites ouvertures (2g") de l'autre jeu sont disposées de manière à s'étendre sensiblement perpendiculairement au sens de la longueur de la feuille et à être alignées avec des bords adjacents des plaques collectrices de courant (1a) des rangées.

13. Structure de support selon la revendication 1 ou 2, dans laquelle les plaques collectrices de courant (1a, 1b, 1c) sont fixées aux segments de ressort à lame (20) au niveau du bord extérieur du ou de chaque jeu d'ouvertures mentionné en premier (2e), une région centrale de la feuille étant fixée à l'élément support (4).

**Patentansprüche**

1. Schleifplattentragstruktur für einen Stromabnehmer, mit: einem bogenförmigen Tragteil (4), welches dazu ausgebildet ist, durch ein sich bewegendes Fahrzeug getragen zu werden, wobei die Längserstrekkung des Teils quer zur Fortbewegungsrichtung des Fahrzeugs angeordnet ist; und mehreren Stromabnehmerplatten (1a, 1b, 1c), die entlang der Länge des Tragteils (4) beabstandet und hierauf durch eine Montagestruktur (2) angebracht sind, die so angeordnet ist, daß die Stücke in Berührung mit einer Versorgungsleitung (5) für das Fahrzeug gebracht werden, wobei die Stromabnehmerplatten (1a, 1b, 1c,) in zumindest zwei Reihen entlang der Länge des Tragteils (4) angeordnet sind, und die Stromabnehmerplatten in einer Reihe in bezug auf die in der anderen Reihe versetzt sind, dadurch gekennzeichnet, daß die Montagestruktur (2) ein Blech aus elektrisch leitfähigem und federelastischem Material aufweist, welches mit zwei Reihen von Öffnungen (2e) versehen ist, daß die Öffnungen in jeder Reihe beabstandet sind, um dazwischen Blattfedersegmente (2b) auszubilden, an welchen die Stromabnehmerplatten (1a, 1b, 1c,) befestigt sind, und daß das Blech an dem Tragteil (4) so befestigt ist, daß die Reihen der Öffnungen (2e) entlang der Längserstreckung des Tragteils (4) angeordnet sind, und daß das Blech längs gebogen ist, um dann, wenn die Struktur in Gebrauch ist, die Stromabnehmerplatten (1a, 1b, 1c,) in Berührung mit der Versorgungsleitung (5) zu bringen, wobei die Montagestruktur (2) eine federelastische Verbindung zwischen den Stromabnehmerplatten (1a, 1b,1c) in der Ebene der Stromabnehmerplatten (1a, 1b, 1c) zu Verfügung stellt und die Stromabnehmerplatten (1a, 1b, 1c,) senkrecht zu dieser Ebene federelastisch haltert, wodurch es ermöglicht wird, daß sich die Stromabnehmerplatten (1a, 1b, 1c) unabhängig bewegen.

2. Tragstruktur nach Anspruch 1, bei welcher die Kanten der Stromabnehmerplatten (1a, 1b, 1c) so geformt sind, daß im wesentlichen Pegeldifferenzen zwischen den Stücken eliminiert werden, wenn die Stromversorgungsleitung (5) eine Stromabnehmerplatte relativ zu ihren Nachbarn herunterdrückt.

3. Tragstruktur nach Anspruch 1 oder 2, bei welcher benachbarte Kanten der Abnehmerplatten (1a') schräg in bezug auf die Fortbewegungsrichtung eines Fahrzeugs verlaufen, welches diesen Stromabnehmer (5) verwendet.

4. Tragstruktur nach Anspruch 2, bei welcher Außenkanten der am weitesten am Ende gelegenen Abnehmerplatten (1c) beider Sätze schräg sind und einen dreieckigen Raum ausbilden, wobei weiterhin eine Hilfsabnehmerplatte (3) vorgesehen ist, die ein dreieckiges Ende in dem dreieckigen Raum aufweist, wobei aneinanderstoßende Teile der am weitesten am Ende gelegenen Abnehmerplatten (1c) und der Abnehmerplatte (3) ausgekehlt sind.

5. Tragstruktur nach einem der voranstehenden Ansprüche, bei welcher Abschnitte des Bleches, die die Blattfedersegmente (2b) verbinden, zu Schleifen (2f) in Form eines umgekehrten $\Omega$ ausgeformt sind.

6. Tragstruktur nach Anspruch 5, bei welcher die Schleifen in Form eines ungekehrten $\Omega$ polygonal (2G) sind, beispielsweise rechteckig.

7. Tragstruktur nach Anspruch 5 oder 6, bei welcher die Schleifen (2f, 2f') mit der Form eines umgekehrten $\Omega$ des Bleches ursprüngliche Federkräfte aufweisen, die nach innen wirken, um die hiermit zugeordneten Stromabnehmerplatten (1a'-1, 1a'-2) in Anlage miteinander zu zwingen.

8. Tragstruktur nach Anspruch 7, bei welcher Oberflächen benachbarter Kanten der Stromabnehmerplatten (1a'-1, 1a'-2) so geneigt sind, um dazwischen einen dreieckigen Raum (P) zu bilden, der in Richtung auf jede der Schleifen in Form eines umgekehrten $\Omega$ divergiert, daß Oberkanten der Oberflächen der benachbarten Kanten nomalerweise in Linienberührung miteinander in Folge der ursprünglichen Kraft (F) der Schleifen mit der Form eines umgekehrten $\Omega$ stehen.

9.  Tragstruktur nach Anspruch 1, bei welcher das Blech einen weiteren Satz von Öffnungen (2g) aufweist, die entlang einem zentralen Bereich des Blechs angeordnet sind, die Stromabnehmerplatten (1a) in zwei Reihen befestigt sind, die sich auf jeder Seite der zentralen mehreren Öffnungen (2g) erstrecken, und gegenüberliegende Kantenbereiche des Bleches um das Tragteil (4) herum gebogen und an diesem befestigt sind.

10. Tragstruktur nach Anspruch 9, bei welcher die Öffnungen (2g) des weiteren Satzes schräg angeordnet sind, um sich zwischen benachbarten Kanten zweier Stromabnehmerplatten (1a) in einer Reihe und benachbarten Kanten der beiden nächsten Stromabnehmerplatten (1a) in der anderen Reihe zu erstrecken.

11. Tragstruktur nach Anspruch 9, angehängt an Anspruch 2, bei welcher die Öffnungen (2g') des weiteren Satzes schräg angeordnet sind, so daß sie sich zwischen einem Zentrum einer Stromabnehmerplatte (1a) in einer Reihe und einem Zentrum den nächsten Stromabnehmerplatte (1a) in der anderen Reihe erstrecken.

12. Tragstruktur nach Anspruch 9, angehängt an Anspruch 2, bei welcher die Öffnungen (2g") des weiteren Satzes so angeordnet sind, daß sie sich in wesentlichen senkrecht zur Länge des Bleches erstrecken, und mit benachbarten Kanten der Stromabnehmerplatten (1a) in den Reihen ausgerichtet sind.

13. Tragstruktur nach Anspruch 1 oder 2, bei welcher die Stromabnehmerplatten (1a, 1b, 1c) an den Blattfedersegmenten (2b) an der Außenkante des oder jedes erstgenannten Satzes von Öffnungen (2e) befestigt sind, und ein zentraler Bereich des Bleches an dem Tragteil (4) befestigt ist.

# FIG_1
## PRIOR ART

4'  5  6  3'  1a''  1b''

# FIG_2
## PRIOR ART

3'  1a''  5  1b''  4'  9  8  10  8  7  8

# FIG_3
## PRIOR ART

1a''  5'  1b''  7  l

EP 0 195 616 B1

# FIG.4

# FIG.5

# FIG.6

14

# FIG.7

# FIG.8

# FIG.9

## FIG_10

## FIG_11

# FIG_12

# FIG_13a

# FIG_13b

FIG_14

FIG_15

FIG_16

FIG_17a

FIG_17b

# FIG. 18

# FIG. 19

# FIG. 20

## FIG. 21

## FIG. 22

## FIG. 23